# EUROPÄISCHE PATENTSCHRIFT

(11) **EP 0 994 198 B1**
(45) Veröffentlichungstag und Bekanntmachung des Hinweises auf die Patenterteilung: **08.05.2002**
(21) Anmeldenummer: 99119738.5
(22) Anmeldetag: 05.10.1999
(51) Int. Cl.: C22C 38/12, C21D 8/02, B62D 25/00

(54) **Stahllegierung zur Herstellung von Stossfängern für Kraftfahrzeuge**
Steel for the manufacture of car bumpers
Acier pour la fabrication pour pare-chocs de vehicule automobile

(30) Priorität: 13.10.1998 DE 29818245 U
(43) Veröffentlichungstag der Anmeldung: 19.04.2000
(73) Patentinhaber: BENTELER AG, D-33104 Paderborn (DE)
(72) Erfinder: Töpker, Dr. Dieter, 33100 Paderborn (DE)
(74) Vertreter: Ksoll, Peter, Dr.-Ing.

(56) Entgegenhaltungen:
- PATENT ABSTRACTS OF JAPAN vol. 1997, no. 08, 29. August 1997 (1997-08-29) & JP 09 111398 A (NKK CORP), 28. April 1997 (1997-04-28)
- PATENT ABSTRACTS OF JAPAN vol. 1995, no. 11, 26. Dezember 1995 (1995-12-26) & JP 07 197186 A (KOBE STEEL LTD), 1. August 1995 (1995-08-01)
- PATENT ABSTRACTS OF JAPAN vol. 1995, no. 11, 26. Dezember 1995 (1995-12-26) & JP 07 197184 A (KOBE STEEL LTD), 1. August 1995 (1995-08-01)
- PATENT ABSTRACTS OF JAPAN vol. 016, no. 584 (C-1013), 24. Dezember 1992 (1992-12-24) & JP 04 235253 A (KAWASAKI STEEL CORP), 24. August 1992 (1992-08-24)

## Beschreibung

Die Erfindung betrifft eine Stahllegierung für Rohre, Bleche oder Profile zur Herstellung von Stoßfängern für Kraftfahrzeuge.

Stoßfänger werden an Front und Heck eines Kraftfahrzeuges zwischen der die Karosserie abschließenden Kunststoffverschalung und dem Rahmen des Kraftfahrzeuges eingegliedert. Sie sollen leichte Stöße und Kollisionen ohne oder mit nur geringen Fahrzeugbeschädigungen abfangen. Die Wirkungsweise eines Stoßfängers besteht darin, die aus einem Anprall resultierende kinetische Energie in Verformungsarbeit umzuwandeln, so dass es zu keinen plastischen Verformungen an der Karosseriestruktur, insbesondere an den Längsträgern der Karosserie, kommt. Ein Stoßfänger muss folglich eine ausreichende Festigkeit bei hoher Elastizität und Biegesteifigkeit haben, um die auftretenden Kräfte und Momente aufnehmen zu können und diese abzuleiten.

Da Stoßfänger vornehmlich aus Rohren, Blechen oder Profilen im Kaltumformverfahren in hohen Stückzahlen hergestellt werden, muss ferner auf eine rationelle Produktion geachtet werden, wobei insbesondere der Verschleiß an den Umformwerkzeugen gering gehalten werden soll, da sich der auftretende Verschleiß nachteilig auf die Produktionskosten sowie Stillstands- und Wartungszeiten auswirkt.

In PATENT ABSTRACTS OF JAPAN vol. 1995, No. 11, 26. Dezember 1995 (1995-12-26) & JP 07197186A (KOBE STEEL LTD), 1. August 1995 (1995-08-01) ist eine Stahllegierung für Bleche zur Herstellung von Stoßfängern für Kraftfahrzeuge offenbart. Die Bleche werden heißgewalzt und bestehen aus einer Legierung mit 0,10 bis 0,35 % Kohlenstoff, ≤ 1,5 % Silizium, 1,0 bis 3,5 % Mangan, ≤ 0,03 % Phosphor, ≤ 0,02 % Schwefel, 0,02 bis 0,10 % Aluminium, ≤ 0,01 % Stickstoff sowie weiterhin eine oder mehrere Legierungskomponenten wie 0,04 bis 0,02 % Titan, ≤ 0,10 % Vanadium, ≤ 0,10 % Niob und, falls erforderlich, weiterhin 1,5 % Molybdän, ≤ 0,01 % Bor, 1,5 % Chrom, Rest Eisen einschließlich erschmelzungsbedingter Verunreinigungen. Die Stahlbleche sollen eine Festigkeit von mehr als 980 N/mm² besitzen.

Es ist ausgehend vom Stand der Technik Aufgabe der Erfindung, eine Stahllegierung aufzuzeigen für Rohre, Bleche oder Profile, aus denen Stoßfänger für Kraftfahrzeuge rationell und wirtschaftlich hergestellt werden können mit bauteilgerechten Werkstoffeigenschaften, insbesondere hoher Elastizität und gutem Energieabsorptionsvermögen.

Die Lösung dieser Aufgabe besteht nach der Erfindung in einer Stahllegierung gemäß Anspruch 1.

Danach besteht die Stahllegierung in Gewichtsprozenten ausgedrückt aus 0,17 bis 0,20 % Kohlenstoff, 1,70 bis 2,20 % Mangan, 0,45 bis 0,75 % Chrom, 0,10 bis 0,35 % Molybdän, 0,03 bis 0,05 % Aluminium, 0,01 bis 0,05 % Titan, 0,01 bis 0,12 % Vanadium, 0,025 bis 0,06 % Niob, 0,0001 bis 0,10 % Zirkonium, 0,002 bis 0,003 % Bor, 0,01 bis 0,04 % Stickstoff, bis zu 0,15 % Silizium sowie bis zu 0,025 % Phosphor und bis zu 0,010 % Schwefel, wobei der Rest Eisen ist, einschließlich erschmelzungsbedingter Verunreinigungen und die Summe der Legierungskomponenten Titan, Vanadium und Niob zwischen 0,16 und 0,25 % liegt.

Ein aus einer erfindungsgemäßen Stahllegierung bzw. hieraus hergestellten Rohren, Blechen oder Profilen gefertigter Stoßfänger (Anspruch 2) besitzt ein anforderungsgerechtes Belastungsverhalten. Er weist eine bauteilgerechte Biegesteifigkeit mit einem elastischen Dämpfungsvermögen auf. Eingeleitete Anprallkräfte werden elastisch aufgenommen und kompensiert, ohne dass es zu einer nachteiligen Krafteinleitung in den Rahmen des Kraftfahrzeuges kommt.

Die Legierungskomponenten sind zweckentsprechend auf die Fertigung von Stoßfängern für Kraftfahrzeuge und die damit verbundenen Anforderungen abgestimmt. Der Kohlenstoffanteil bewirkt in Verbindung mit dem Mangan eine ausreichend hohe Festigkeit unter Gewährleistung der gewünschten hohen Elastizität.

Der Anteil an Zirkonium verbessert die Mikrohärtung. Hierzu trägt ebenfalls das vorgesehene Verhältnis von Titan, Vanadium und Niob bei, welches in der Summe zwischen 0,16 und 0,25 % liegen soll. Dies hat sich in praktischen Versuchen als besonders vorteilhaft erwiesen.

Wesentliche Legierungskomponente ist ferner Chrom in Verbindung mit Molybdän, Aluminium und Bor.

Durch die Hinzufügung von Molybdän wird die Sprödbruchneigung bei tiefen Temperaturen wesentlich verringert. Der Temperaturabfall (Übergang zwischen duktilem Bruch zum Sprödbruch) wird im Kerbschlag-Biegediagamm nach links zu den tieferen Temperaturen hin verschoben. Dies erlangt seine besondere Bedeutung dann, wenn über vergleichsweise lange Zeiträume tiefe Temperaturen berücksichtigt werden müssen.

Chrom trägt zur Einstellung der gewünschten Festigkeit bei. Das Molybdän erhöht die Zugfestigkeit, Aluminium unterstützt die Feinkornbildung, Bor verbessert die Durchhärtung und erhöht die Kernfestigkeit. Chrom ebenso wie Aluminium tragen zudem zur Korrosionsbeständigkeit bei. Schließlich muss auch Stickstoff erwähnt werden, welches eine Oberflächenhärtung bewirkt. Durch seine Affinität zu Titan, Vanadium, Zirkonium und Aluminium wird eine Gefügeverfeinerung herbeiführt. Dies trägt zur hohen geforderten Duktilität des Werkstoffs bei.

Im Rahmen der Erfindung ist es von Bedeutung, dass die Legierungszusammensetzung und eine gezielt eingestellte Haspeltemperatur beim Warmwalzprozess zusammenwirken.

Normalerweise liegt die Haspeltemperatur bei 650°C bis 600°C. Erfindungsgemäß wird sie jetzt auf ≤550°C herabgesetzt, wobei die gewünschte Gefügestruktur Bainit + Martensit eingestellt wird. Es wird ein Gefüge von etwa 70% bis 50% Bainit und 40% bis 20% Martensit erzielt.

## Patentansprüche

1. Stahllegierung für Rohre, Bleche oder Profile zur Herstellung von Stoßfängern für Kraftfahrzeuge bestehend - in Gewichtsprozenten ausgedrückt - aus
| | | |
|---|---|---|
| Kohlenstoff | (C) | 0,17 bis 0,20 % |
| Mangan | (Mn) | 1,70 bis 2,20 % |
| Chrom | (Cr) | 0,45 bis 0,75 % |
| Molybdän | (Mo) | 0,10 bis 0,35 % |
| Aluminium | (Al) | 0,03 bis 0,05 % |
| Titan | (Ti) | 0,001 bis 0,05 % |
| Vanadium | (V) | 0,01 bis 0,12 % |
| Niob | (Nb) | 0,025 bis 0,06 % |
| Zirkonium | (Zr) | 0,0001 bis 0,10 % |
| Bor | (B) | 0,002 bis 0,003 % |
| Stickstoff | (N) | 0,01 bis 0,04 % |
| Silizium | (Si) | max. 0,15 % |
| Phosphor | (P) | max. 0,025 % |
| Schwefel | (S) | max. 0,010 % |
Rest Eisen einschließlich erschmelzungsbedingter Verunreinigungen, wobei die Summe der Legierungskomponenten Titan, Vanadium und Niob zwischen 0,16 und 0,25 % liegt.

2. Stoßfänger für Kraftfahrzeuge aus einer Stahllegierung gemäß Anspruch 1.

## Claims

1. A steel alloy for tubes, sheets or profiles for producing bumpers for motor vehicles, the alloy comprising the following, in percentages by weight:
| | | |
|---|---|---|
| Carbon | (C) | 0.17 to 0.20% |
| Manganese | (Mn) | 1.70 to 2.20% |
| Chromium | (Cr) | 0.45 to 0.75% |
| Molybdenum | (Mo) | 0.10 to 0.35% |
| Aluminium | (Al) | 0.03 to 0.05% |
| Titanium | (Ti) | 0.001 to 0.05% |
| Vanadium | (V) | 0.01 to 0.12% |
| Niobium | (Nb) | 0.025 to 0.06% |
| Zirconium | (Zr) | 0.0001 to 0.10% |
| Boron | (B) | 0.002 to 0.003% |
| Nitrogen | (N) | 0.01 to 0.04% |
| Silicon | (Si) | Max. 0.15% |
| Phosphorus | (P) | Max. 0.025% |
| Sulphur | (S) | Max. 0.010% |
remainder iron including impurities due to smelting, wherein the sum of the alloy components titanium, vanadium and niobium is between 0.16 and 0.25%.

2. A bumper for motor vehicles, made of a steel alloy according to claim 1.

## Revendications

1. Acier pour conduit, tôle ou profilé pour la fabrication de pare-chocs de véhicules automobiles renfermant en pourcentage en poids :
| | | |
|---|---|---|
| Carbone | (C) | 0,17 à 0,20 % |
| Manganèse | (Mn) | 1,70 à 2,20 % |
| Chrome | (Cr) | 0,45 à 0,75 % |
| Molybdène | (Mo) | 0,10 à 0,35 % |
| Aluminium | (Al) | 0,03 à 0, 05 % |
| Titane | (Ti) | 0,001 à 0,05 % |
| Vanadium | (V) | 0,01 à 0,12 % |
| Niobium | (Nb) | 0,025 à 0,06 % |
| Zirconium | (Zr) | 0,0001 à 0,10 % |
| Bore | (B) | 0,002 à 0,003 % |
| Azote | (N) | 0,001 à 0,04 % |
| Silicium | (Si) | maximum 0,15 % |
| Phosphore | (P) | maximum 0,025 % |
| Soufre | (S) | maximum 0,010 % |
le reste étant du fer, y compris les impuretés de fusion, si bien que la somme des composants de l'alliage titane, vanadium et niobium se situe entre 0,16 et 0,25 %.

2. Pare-chocs pour véhicules automobiles constitués d'un acier, selon la revendication 1.
